# EUROPEAN PATENT SPECIFICATION

(11) **EP 4 490 346 B1**
(45) Date of publication and mention of the grant of the patent: **25.02.2026**
(21) Application number: 23709206.9
(22) Date of filing: 07.03.2023
(51) Int. Cl.: C25C 1/20, C22B 7/00

(54) **AN ELECTROCHEMICAL PROCESS FOR RECOVERING PLATINUM GROUP METALS (PGMS) FROM SOLID RESIDUES**
ELEKTROCHEMISCHES VERFAHREN ZUR RÜCKGEWINNUNG VON PLATINGRUPPENMETALLEN (PGMS) AUS FESTEN RÜCKSTÄNDEN
PROCÉDÉ ÉLECTROCHIMIQUE POUR LA RÉCUPÉRATION DE MÉTAUX DU GROUPE PLATINE (PGMS) À PARTIR DE RÉSIDUS SOLIDES

(30) Priority: 08.03.2022 EP 22382212
(43) Date of publication of application: 15.01.2025
(73) Proprietor: Fundación Tecnalia Research & Innovation, 48160 Derio - Bizkaia (ES)
(72) Inventor: SIRIWARDANA, Amal Inoka, 20009 DONOSTIA-SAN SEBASTIAN (ES); UNZURRUNZAGA ITURBE, Ainhoa, 20009 DONOSTIA-SAN SEBASTIAN (ES); DEL RÍO GAZTELURRUTIA, Carmen, 20009 DONOSTIA-SAN SEBASTIAN (ES); HIDALGO BETANZOS, Joaquin, 20009 DONOSTIA-SAN SEBASTIAN (ES); POZO ZAMORA, Guillermo Alonso, 20009 DONOSTIA-SAN SEBASTIAN (ES); ANDRÉS GARCÍA, Elisabet, 20009 DONOSTIA-SAN SEBASTIAN (ES); BELAUSTEGUI ITUARTE, Yolanda, 20009 DONOSTIA-SAN SEBASTIAN (ES); MARTIN UGARTE, Eider, 20009 DONOSTIA-SAN SEBASTIAN (ES)
(74) Representative: ZBM Patents - Zea, Barlocci & Markvardsen
(86) International application number: PCT/EP2023/055813
(87) International publication number: WO 2023/170106

(56) References cited:
- CN-A- 112 593 084
- LANZINGER G ET AL: "Electrodeposition of palladium films from ionic liquid (IL) and deep eutectic solutions (DES): physical-chemical characterisation of non-aqueous electrolytes and surface morphology of palladium deposits", TRANSACTIONS OF THE INSTITUTE OF METAL FINISHING., vol. 91, no. 3, 12 May 2013 (2013-05-12), GB, pages 133 - 140, XP055971680, ISSN: 0020-2967, DOI: 10.1179/0020296713Z.00000000097
- WIECKA ZUZANNA ET AL: "Recovery of platinum group metals from spent automotive converters by leaching with organic and inorganic acids and extraction with quaternary phosphonium salts", SEPARATION AND PURIFICATION TECHNOLOGY, ELSEVIER SCIENCE, AMSTERDAM, NL, vol. 280, 15 October 2021 (2021-10-15), XP086859715, ISSN: 1383-5866, [retrieved on 20211015], DOI: 10.1016/J.SEPPUR.2021.119933
- QINGHUA ZHANG ET AL: "Deep eutectic solvents: syntheses, properties and applications", CHEMICAL SOCIETY REVIEWS, vol. 41, no. 21, 17 July 2012 (2012-07-17), pages 7108 - 7146, XP055140829, ISSN: 0306-0012, DOI: 10.1039/c2cs35178a

## Description

This application claims the benefit of European Patent Application EP22382212.3 filed on March 3, 2022.

### Technical Field

The present invention relates to the field of recovery of metals from solid residues. More specifically, it relates to an electrochemical process for recovering platinum group metals (PGMs) from solid residues such as spent autocatalysts.

### Background Art

Platinum Group Metals (PGMs), that is platinum (Pt), palladium (Pd), ruthenium (Ru), rhodium (Rh), iridium (Ir) and osmium (Os), are classified by the European Commission (EC) as Critical Raw Materials (CRMs). PGMs are used in a wide range of industrial applications for which there are often no substitutes.

The primary use of PGMs is for their catalytic properties, with applications in the automotive, chemical manufacture, and petroleum refining industries. The PGMs market was in deficit in 2019, and all-time highs were seen in PGMs prices in 2020. In this context, Europe is the world's largest consumer of PGMs in industrial applications with roughly constant demand every year, particularly for the production of automotive catalysts. However, the primary production of PGMs in the EU is insignificant, and about 84% of the primary supply comes from South Africa and Russia, countries with suboptimal geopolitical stability.

The recycling input rate of end-of-life (EOL) products containing PGMs in Europe is estimated at only 14%, and therefore is largely insufficient to meet the EU demand. Therefore, there is still a vast untapped potential for improving the abovementioned recycling percentage, notably by enhancing the current recycling rate. EOL products containing PGMs such spent autocatalysts are considered as promising platinum group metals (PGMs) resources. These secondary resources of PGMs contain considerably higher PGM concentrations than their corresponding ores. Recycling of EOL products containing PGMs presents attractive advantages, particularly for the conservation of primary resources reserves, and for the reduction of negative environmental impact due to exploitation.

The PCT application WO2008155464 generally describes a method for recovering metals, from a spent catalyst composition which contains an organic contaminant and catalytically active metals on a catalyst support. In this process, the metals, cobalt, nickel, molybdenum, rhenium, or precious metals, are leached from the spent catalyst composition by adding an ionic liquid, which comprises an ammonium compound and a hydrogen bond donor, which is capable of forming a hydrogen bond with the ammonium compound.

CN112593084 discloses a method for recovering Pt from spent membrane of fuel cells. The membrane is leached with nitric acid in order to remove catalysts layer. The latter is then submitted or electrolysis using deep eutectic solvent as an electrolyte.

LANZINGER G. et al, "Electrodeposition of palladium films from ionic liquid (IL) and deep eutectic solutions (DES): physical-chemical characterisation of non-aqueous electrolytes and surface morphology of palladium deposits", Transactions of the Institute of Metal Finishing, vol. 91, no. 3, 2013, pages 133-140, discloses a method for electrochemical deposition of Pd film on the cathode inter alia from DES (mixture of choline chloride and urea).

Thus, there continues to be a need of finding an environmentally friendly, cost effective and efficient method for recovering PGMs from solid residues, particularly from spent automotive catalysts, which overcome the problems of the prior art.

### Summary of Invention

The inventors have developed an electrochemical process for recovering platinum group metals (PGMs), particularly of Pd, Pt, and Rh, in one-single reactor from a solid residue such as from end-of-life (EOL) products containing PGMs, particularly from spent automotive catalysts, by using a specific electrolyte comprising a deep eutectic solvent (DES). Advantageously, the process allows the concomitant recovery of PGMs via their selective electrodeposition while leaving the main metal impurities in solution, thus limiting the co-deposition of impurities with the recovered PGMs. Hence, a versatile and efficient process for recovering PGMs from solid residues that uses a compact design and that is easy to automatize is provided.

Accordingly, the invention relates to an electrochemical process for recovering platinum group metals (PGMs) from a PGM-containing solid residue, the process comprising the steps of:
a) subjecting the solid residue to electroleaching in order to leach the PGMs from the solid residue and, concomitantly, electrodepositing the leached PGMs onto the cathode; wherein electroleaching and electrodepositing are carried out in an electrolyte comprising a deep eutectic solvent (DES) and an aqueous solution comprising chloride ions and having a pH<7; and
b) recovering the electrodeposited PGMs
wherein the DES consists of a mixture of:
(i) a hydrogen bond acceptor (HBA) compound (A) which is choline chloride; and
(ii) a hydrogen bond donor (HBD) compound (B) selected from (C₁-C₁₂)alcohol, (C₁-C₁₂)aldehyde, (C₁-C₁₈)carboxylic acid, (C₁-C₆)urea, (C₁-C₁₂)amide, (C₁-C₁₂)nitrogenated compound, (C₁-C₁₂)aminoacid, and (C₁-C₁₂)sugar;
in a molar ratio of (A) to (B) from 1:10 to 10:1.

Although it is known the use of some DES for the recovery by leaching of PGMs contained in some solid residues such as spent autocatalysts, the use of DES in conjunction with chloride ions in an aqueous solution having a pH<7 (such as with an NaCl aqueous solution and in the presence of HCl) for the concomitant electroleaching and electrodepositon of PGMs from this kind of residues has not been suggested.

The combination of electroleaching and electrodeposition in the conditions defined above allows carrying out the recovery of platinum group metals (PGMs) in one-single reactor. Unexpectedly, as shown in the Examples, the process leads to a selective and increased recovery of the PGMs contained in the solid residue compared to the processes of the prior art, particularly, to those where conventional leaching with DES is performed.

PGM-containing solid residues comprise impurities of other metals such as Al, Fe, La, Ce, Pb, and Nd. The process of the invention allows recovering the electrodeposited PGMs, while impurities of other metals either remain in the solid residue or, after being electroleached, remain in solution, as is the case of Al, Fe, La, Ce and Nd.

An additional advantage of the process of the invention is that it can be carried out under very mild conditions in particular using a mixture of a DES and an aqueous solution of NaCl, with HCl as additive. DESs can be prepared from naturally occurring precursors, and the aqueous solution of NaCl needed to form the electrolyte mixture can be obtained from seawater, what is advantageous in terms of availability and costs.

Importantly, by carrying out an electroleaching step, strong oxidizing agents such as hydroxyl radicals (•OH), hydrogen peroxide (H₂O₂), or both are created *in-situ,* what makes the addition of external oxidizing agents such as H₂O₂ or concentrated strong acids unnecessary.

All these features make the process particularly suitable to be used on an industrial scale.

### Brief Description of Drawings

Fig. 1 shows the mechanism of a single electrochemical reactor for the direct recovery of PGMs from solid residues (R) according to the process of the present invention. A: anode; K: cathode.

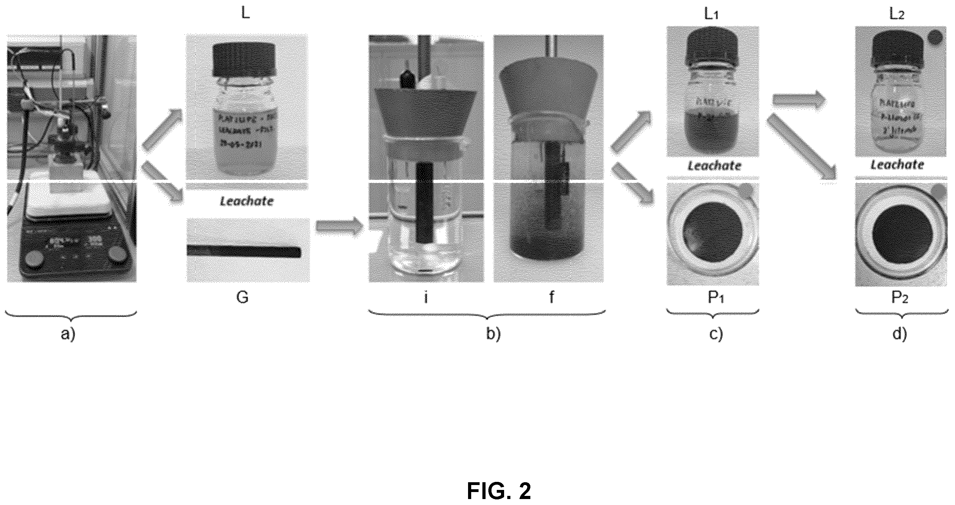

Fig. 2 shows a flowsheet of the electroleaching experiment, including the leaching and the polarization step. a) Electroleaching as in Example 1 (DES solution of Choline chloride (ChCl)/formic acid + HCl +an aqueous solution of NaCl (0.5 M), 64 mA/cm²; t=3; WE=Boron doped diamond (BDD); G: PGMs deposited on the graphite; L: leachate; b) Switch polarization, aqueous solution of NaCl (0.5 M) (1 V; ~30 min; WE = graphite), i: initial, f: final; c) 1st filtration (5 µm pore), P₁: first filtered precipitate, L₁: first leachate; d) 2nd filtration (0.45 µm pore), L₂: second leachate, P₂: filtered precipitate.
Fig. 3 shows the chronoamperometry test applying 1 V (electric current (mA) vs. time (min)); after 5 minutes, the current decrease until almost 0, which is a signal of PGMs detachment.

### Detailed description of the invention

All terms as used herein in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

The term "Platinum Group Metals (PGMs)" refer to the group of platinum (Pt), palladium (Pd), ruthenium (Ru), rhodium (Rh), iridium (Ir) and osmium (Os). Of particular interest for the purposes of the present invention are Pd, Pt, and Rh. As an instance, this three PGMs are present in spent catalyst.

As used herein, the term "electroleaching" refers to the process of detaching or extracting a solute (in the content of the present invention, a PGM as defined above) from a solid starting product by way of a solvent (in the context of the present invention, the specific DES as defined herein), wherein the chemical reactions on the targeted species are performed by electrons in electrochemical reactions. Particularly, the chemical reagents such as oxidizing reagents can be generated at the electrodes.

The term "leachate" as used herein refers to the liquid that contains the extracted or leached out metal initially contained in the solid starting product.

As used herein, the term "electrodeposition" refers to the process where metals ions present in an electrolyte are reduced in a cathode to form the metal deposit.

As used herein, the term "room temperature" means a temperature from 15 °C to 35 °C, particularly from 20 °C to 25 °C.

As used herein, the term "wt.%" (percentage by weight) of a component refers to the amount of the single component relative to the total weight of the composition or, if specifically mentioned, of another component.

The term "about" or "around" as used herein refers to a range of values ± 10% of a specified value. For example, the expression "about 10" or "around 10" includes ± 10% of 10, i.e. from 9 to 11.

As used herein, the indefinite articles "a" and "an" are synonymous with "at least one" or "one or more". Unless indicated otherwise, definite articles used herein, such as "the", also include the plural of the noun.

As mentioned above the present invention relates to an electrochemical process for recovering platinum group metals (PGMs) from a PGM-containing solid residue in one-single reactor, by subjecting the solid residue to an electroleaching and, concomitantly, to an electrodeposition process by using an electrolyte comprising a specific deep eutectic solvent (DES) and an aqueous solution comprising chloride ions and having a pH<7.

PGM-containing solid residue are usually EOL products containing PGMs. For the purposes of the invention, the term "end-of-life" (EOL) product refers to a product containing PGMs, particularly PGMs in metallic, oxides or alloy form, that has reached the end of their useful life.

Thus, in an embodiment of the process of the invention, the PGM-containing solid residue can be a secondary source from which the PGMs, particularly Pd, Pt, and Rh, are to be recovered and recycled, such as spent autocatalysts, tailings, electronic wastes, spent membranes residues, catalytic converters, spent petroleum refining catalysts, spent Proton Exchange Membrane fuel cells (PEMFC), spent catalysts used in the chemical industry, and any other EOL PGM-containing material. Particularly, the PGM-containing solid residue is a spent autocatalysts and a spent membrane residue with Pd content. Preferably, the PGM-containing solid residue is in the form of a powder obtained by conventional milling processes.

The terms "autocatalyst", "car catalyst", "automobile/automotive catalyst", "automobile/ automotive catalytic converter", "vehicle catalytic converter (VCC)" or simply "converter" are used herein interchangeably.

In another embodiment, optionally in combination with one or more features of the various embodiments described above or below, the aqueous solution comprising chloride ions is an aqueous solution containing a water-soluble chloride salt such as KCl and NaCl. The pH<7, that is the acidic medium, can be obtained by the addition of an acid, particularly an inorganic acid selected from sulfuric acid (H₂SO₄), hydrochloric acid (HCl), and nitric acid (HNO₃), more particularly of HCl.

In another embodiment, optionally in combination with one or more features of the various embodiments described above or below, the acid is added in a weight ratio of solid residue:inorganic acid from 1:0.5 to 1:2, particularly of about 1:1. Particularly, the inorganic acid is added in the form of an aqueous solution at a concentration from 1 M to 4 M, such as 2 M.

In another embodiment, optionally in combination with one or more features of the various embodiments described above or below, the aqueous solution comprising chloride ions and having a pH<7 is a mixture of water comprising NaCl in a concentration from 0 M to 2.5 M and HCl as additive, such as HCl in the form of an aqueous solution. In a particular embodiment, the aqueous solution comprising chloride ions and having a pH<7 is water in the presence of HCl as additive such as in the form of an aqueous solution. In another particular embodiment, the aqueous solution comprising chloride ions and having a pH<7 is an aqueous solution of NaCl in the presence of HCl as additive such as in the form of an aqueous solution. Particularly, the NaCl in the aqueous solution is in a concentration from 0.3 M to 2.5 M, or from 0.5 M to 2.0 M, or from 0.5 M to 1.5 M, or from 0.5 M to 1 M, such as of 0.5 M or 0.6 M.

In another embodiment, optionally in combination with one or more features of the various embodiments described above or below, the DES is in an amount from 75 wt.% to 90 wt%, particularly of 80 wt.%, with respect to the total amount of DES and water, optionally containing NaCl. Particularly, water comprises NaCl in a concentration from 0.3 M to 0.6 M. In an example, the concentration of the aqueous solution of NaCl is 0.5 M, and the amount of DES is 80 wt.% with respect to the total amount of DES and aqueous solution of NaCl. More particularly, as the aqueous solution of NaCl seawater can be used.

In another embodiment, optionally in combination with one or more features of the various embodiments described above or below, the weight ratio solid residue to electrolyte is from 1:5 to 1:15, particularly of 1:5, 1:9, 1:10, or 1:15, more particularly of 1:9.

The electrochemical process of the invention can be carried out in a reactor comprising a working electrode, a counter electrode, and a reference electrode.

In an embodiment, optionally in combination with one or more features of the various embodiments described above or below, the concomitant electroleaching and electrodepositon process (step a) is carried out in a reactor comprising a counter electrode such as of a carbon or metal-based material, carbon paper, or nickel plate, particularly of graphite-plate; a reference electrode such as of Ag/AgCl, calomel, or hydrogen reference electrode, particularly of Ag/AgCl; and a working electrode selected from a boron-doped diamond (BDD) and a boron-doped reduced graphene oxide-based graphite (BRGO). Advantageously, BDD and BRGO are non-sacrificial anodes, unlike the ones used in the processes of the prior art, which are sacrificial anodes.

Concomitant electroleaching and electrodeposition in step a) can be performed by applying a potential or a current density. The applied potential can be adjusted to obtain the desired current density and leaching efficiencies. Particularly, a potential from 2.5 V to 3 V, more particularly from 2.5 V to 3 V, or alternatively, a current density from 45 mA/cm² to 64 mA/cm², such as of 64 mA/cm² can be applied.

For such purpose, the three-electrode setup can be electrically connected to a source voltage or current, such as a potentiostat, which can be used either in potentiostatic mode or in galvanostatic mode.

The application of either a potential or a current density to the three-electrode setup by using the mentioned electrolyte leads to oxidation reactions of water and chloride anions contained in the electrolyte and to the *in situ* formation of several strong oxidizing agents such as hydroxyl radicals (•OH), hydrogen peroxide (H₂O₂), and Cl₂.

Advantageously, the process of the invention can be carried out working directly with PGMs-residues without adding any extra PGM salt or any external oxidizing agent.

The reaction can be carried out at a temperature significantly under 100 °C, particularly at a temperature from 20 °C to 100 °C, such as of 80 °C. Thus, this represents an advantage over other processes of the prior art for recovering PGMs from solid residues by leaching in DES, or by electroleaching and electrodeposition in other electrolytes such as ionic liquids, where temperatures close to 100 °C are needed.

As it will be known by those skilled in the art, the reaction time can vary depending on several factors such as the specific conditions, the nature of the PGM-containing solid residue, the specific DES used in the electrolyte, the PGM to be electro-deposited, and the amount of PGM-containing solid residue. Nevertheless, the reaction time is significantly reduced compared to the reaction time required to recover PGMs by the processes of the prior art.

In order to ease the electroleaching of the metals, the process can be carried out under stirring.

The efficiency of the process of the invention may be further enhanced by carrying out the process with a homogeneous PGM-containing solid residue, in particular in powder form such as with particles below 2 mm of average particle size. Thus, if desired, the PGM-containing solid residue can be conveniently pre-treated by methods well-known in the art which include for example pre-treatments aimed at size reducing, homogenizing, surface cleaning and the like.

Conventional physical pre-treatment steps typically include, firstly, dismantling of the converters to separate the precious-metal-bearing carrier material from the non-precious-metal-bearing steel casing, by de-canning in the case of ceramic converters, or shredding in the case of metallic converters. This step is generally followed by comminution steps such as crushing or milling. Further advanced pre-treatments, such as oxidative/reducing steps or calcination may be also applied. For example, if the spent platinum-containing material contains platinum or palladium in oxide form (e.g., PtO₂, PtO, PdO, PdO₂), a pre-reduction step for example with formic acid could be beneficial.

In an embodiment, optionally in combination with one or more features of the various embodiments described above or below, the concomitant electroleaching and electrodepositon process (step a) is carried out for a period of time from 1 hour to 6 hours, such as of 2, 3, or 4 hours.

### Deep Eutectic Solvents

As mentioned above, the deep eutectic solvent used in the electrochemical process of the present disclosure consist of a mixture of a hydrogen bond acceptor (HBA) compound (A) which is choline chloride, and a hydrogen bond donor (HBD) compound (B) selected from the group consisting of (C₁-C₁₂)alcohols, (C₁-C₁₂)aldehydes, (C₁-C₁₈)carboxylic acids, (C₁-C₆)ureas, (C₁-C₁₂)amides, (C₁-C₁₂)nitrogenated compounds, (C₂-C₁₂)amino acids and (C₁-C₁₂)sugars.

Non-limiting examples of HBDs include (C₁-C₆)ureas such as urea, 1-(trifluoromethyl)urea, 1-methylurea, allylurea, 1,3-dimethylurea, 1,1-dimethylurea, thiourea, tetramethylurea; (C₁-C₁₂)amides such as N-methylacetamide, acetamide, benzamide, 2,2,2-trifluoroacetamide, salicylamide; (C₁-C₁₂)alcohols such as ethanediol, 9-anthracenemethanol, ethanol, propan-2-ol, mannitol, 8-hydroxyquinoline, methyl salicylate, and phenyl-salicylate, triethanolamine, 2-chloroethanol, 4-hydroxy-3-methoxybenzaldehyde (vanillin), p-hydroxybenzaldehyde, benzyl alcohol, phenol, p- methylphenol, o-methylphenol, m-methylphenol, p-chlorophenol, p-aminophenol, xylenol, glycerol, ethylene glycol, triethyleneglycol, 1,4-butanediol, 1,6-hexanediol; (C₁-C₁₂)aldehydes such as benzaldehyde; (C₂-C₁₂)amino acids such as glycine, alanine, lysine, phenylalanine; (C₁-C₁₂)sugars such as fructose, lactose, saccharin, glucose, xylitol, sorbitol;

(C₁-C₁₈)carboxylic acids such as trifluoroacetic acid, glycolic acid, trichloroacetic acid, glyoxylic acid, benzoic acid, citric acid, mandelic acid, valeric acid, tartaric acid, glutaric acid, m-nitrobenzoic acid, p-hydroxybenzoic acid, glutamic acid, m-aminobenzoic acid, malonic acid, oxalic acid, benzoic acid, phenylacetic acid, phenylpropionic acid, itaconic acid, levulinic acid, propane-1,2,3-tricarboxylic acid (tricarballylic acid), salicylic acid, trans-cinnamic acid, 3,5-dinitrobenzoic acid, nicotinic acid, stearic acid, hippuric acid, oleic acid, terephthalic acid, adipic acid, malic acid, succinic acidacetic acid and lactic acid; and (C₁-C₁₂)nitrogenated compounds such as aniline, imidazole, hydroxylamine hydrochloride, diaminoethane, 1,2-diaminopropane, pyridine, benzylamine, triethylamine

In one particular embodiment, optionally in combination with one or more features of the various embodiments described above or below, the hydrogen bond donor (B) is selected from (C₁-C₁₂)alcohol, (C₁-C₁₂)aldehyde, (C₁-C₁₈)carboxylic acid, (C₁-C₁₂)amide, (C₁-C₁₂)nitrogenated compound, (C₂-C₁₂)amino acid and (C₁-C₁₂)sugar, more particularly selected from (C₁-C₁₂)alcohol, (C₁-C₁₂)aldehyde, (C₁-C₁₈)carboxylic acid, and (C₁-C₁₂)amide.

In another embodiment, optionally in combination with one or more features of the various embodiments described above or below, the hydrogen bond donor (B) is a (C₁-C₆)urea. More particularly, the hydrogen bond donor is a (C₁-C₆)urea selected from the group consisting of urea, 1-(trifluoromethyl)urea, 1-methylurea, allylurea, 1,3-dimethylurea, 1,1-dimethylurea, thiourea, and tetramethylurea; even more particularly is urea.

In another particular embodiment, optionally in combination with one or more features of the various embodiments described above or below, the hydrogen bond donor (B) is a (C₁-C₁₈)carboxylic acid. Particularly, the hydrogen bond donor is a (C₁-C₁₈)carboxylic acid selected from the group consisting of trifluoroacetic acid, glycolic acid, trichloroacetic acid, glyoxylic acid, benzoic acid, citric acid, mandelic acid, valeric acid, tartaric acid, glutaric acid, m-nitrobenzoic acid, p-hydroxybenzoic acid, glutamic acid, m-aminobenzoic acid, malonic acid, oxalic acid, benzoic acid, phenylacetic acid, phenylpropionic acid, itaconic acid, levulinic acid, propane-1,2,3-tricarboxylic acid (tricarballylic acid), salicylic acid, trans-cinnamic acid, 3,5-dinitrobenzoic acid, nicotinic acid, stearic acid, hippuric acid, oleic acid, terephthalic acid, adipic acid, malic acid, succinic acid, acetic acid and lactic acid. More particularly, the hydrogen bond donor is a (C₁-C₉)carboxylic acid, particularly selected from oxalic acid, formic acid, glycolic acid or lactic acid, more particularly it is oxalic acid or formic acid.

Generally, in the deep eutectic solvent, the hydrogen bond acceptor compound (A) and the hydrogen bond donor (HBD) compound (B) are in a molar ratio of (A) to (B) from 1:10 to 10:1. In one particular embodiment, optionally in combination with one or more features of the various embodiments described above or below, the hydrogen bond acceptor compound (A) and the hydrogen bond donor (HBD) compound (B) are in a molar ratio of (A) to (B) from 1:5 to 5:1, more particularly 1:4 to 4:1, even more particularly from 1:1 to 1:5. Particularly, the hydrogen bond acceptor compound (A) and the hydrogen bond donor (HBD) compound (B) are in a molar ratio of (A) to (B) of 1:1, 1:2, 1:3, 1:4 or 1:5 more particularly 1:2.

The deep eutectic solvent used in the process of the invention may further comprise a second hydrogen bond donor (HBD) compound, thereby forming a ternary deep eutectic solvent. This component may be the same or different from the HBD defined above for the binary DES that consists of a mixture of a hydrogen bond acceptor compound (A), and a hydrogen bond donor (HBD) compound (B).

In one particular embodiment, optionally in combination with one or more features of the various embodiments described above or below, the second hydrogen bond donor of the ternary DES is a (C₁-C₁₈)carboxylic acid. More particularly, the hydrogen bond donor is a (C₁-C₁₈)carboxylic acid selected from the group consisting of trifluoroacetic acid, glycolic acid, trichloroacetic acid, glyoxylic acid, benzoic acid, citric acid, mandelic acid, valeric acid, tartaric acid, glutaric acid, m-nitrobenzoic acid, p-hydroxybenzoic acid, glutamic acid, m-aminobenzoic acid, malonic acid, oxalic acid, benzoic acid, phenylacetic acid, phenylpropionic acid, itaconic acid, levulinic acid, propane-1,2,3-tricarboxylic acid (tricarballylic acid), salicylic acid, trans-cinnamic acid, 3,5-dinitrobenzoic acid, nicotinic acid, stearic acid, hippuric acid, oleic acid, terephthalic acid, adipic acid, malic acid, succinic acid, acetic acid and lactic acid. Even more particularly, the second hydrogen bond donor of the ternary DES is a (C₁-C₉)carboxylic acid, even more particularly is citric acid or malonic acid, and even more particularly, citric acid.

In one particular embodiment, optionally in combination with one or more features of the various embodiments described above or below, the second HBD in the ternary DES is present in an amount from 1 wt% to 40 wt%, more particularly from 5 wt% to 20 wt%, even more particularly from 10 wt% to 15 wt%, with respect to the total weight of DES.

In another particular embodiment, optionally in combination with one or more features of the various embodiments described above or below, the DES used in the process of the invention is selected from the group consisting of choline chloride:oxalic acid; choline chloride:formic acid, choline chloride:lactic acid, choline chloride:lactic acid and citric acid, choline chloride:lactic acid and malonic acid.

In another particular embodiment, optionally in combination with one or more features of the various embodiments described above or below, the DES used in the process of the invention is selected from the group consisting of:
- 100% wt/wt of choline chloride:lactic acid in a molar ratio 1:2,
- 85% wt/wt of choline chloride:lactic acid in a molar ratio 1:1 + 15% wt/wt of citric acid,
- 85% wt/wt of choline chloride:lactic acid in a molar ratio 1:2 + 15% wt/wt citric acid,
- 85% wt/wt of choline chloride:lactic acid in a molar ratio 1:3 + 15% wt/wt citric acid,
- 90% wt/wt of choline chloride: lactic acid in a molar ratio 1:2 + 10% wt/wt malonic acid,
- choline chlorine:formic acid (1:3), and
- choline chlorine:oxalic acid (1:1).

In another particular embodiment, optionally in combination with one or more features of the various embodiments described above or below, the DES used in the process of the invention is a mixture of choline chloride and a carboxylic acid selected from oxalic acid, formic acid, glycolic acid, and lactic acid, particularly from oxalic acid and formic acid. More particularly, the DES is selected from choline chlorine:formic acid (1:3); and choline chlorine:oxalic acid (1:1).

DESs are usually obtained by mixing a hydrogen bond acceptor (HBA) compound (A) as defined above and a hydrogen bond donor (HBD) compound of formula (B) as defined above (e.g., alcohol, amines or carboxylic acid) in the desired amount, preferably by heating at a suitable temperature such as a temperature from room temperature to 100 °C and for a suitable period of time, for example a period from 6 min to 1 hour.

Without wishing to be bound by theory, it is believed that the concomitant electroleaching and electrodeposition processes are possible because, by applying the potential or the current density mentioned above, in addition to the oxidation of the PGMs contained in the solid residue, the following reactions among others, take place:

### Anodic reactions

Electrode type: boron-doped diamond (BDD) (DIACHEM^{®} electrode, CONDIAS) or boron-doped reduced graphene oxide-based graphite (BRGO) (prepared as explained below).

The anodic reaction taking place on the BDD or BRGO are described below:

H₂O → OH˙ _{(radical)} + H⁺ + e⁻ (1)

2Cl⁻ _{(aq)} → Cl_{2 (g)} + 2e⁻ (2)

Cl_{2 (g)} + H₂O 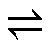 HClO_{(aq)} + HCl _{(aq)} (3)

2 OH˙ _{(radical)} → H₂O₂ (1)

BDD and BRGO electrodes favour the formation of weakly adsorbed hydroxyl radicals, e.g., BDD(OH˙) (1), that are very strong oxidizing agents (E⁰ = 2.8 V) and readily form oxidized products or radicals. In the electrolyte, chloride is present from the aqueous solution of NaCl and is readily oxidized by BDD(OH˙) to form chlorine (2), which can subsequently dissolve to form hypochlorite and hydrochloric acid (3). Electrogenerated hydroxyl radical may also react with each other forming hydrogen peroxide near the electrode surface (4).

### Cathodic reactions

### Electrode type: Graphite

2H₂O + 2e⁻ 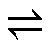 H_{2(g)} + 2OH⁻ (5)

[PtCl₆]²⁻+ H₂ → [PtCl₄]²⁺ + 2H⁺ + 2Cl⁻ (6)

[PtCl₄]²⁻+ H₂ → Pt⁰ + 2H⁺ + 4Cl⁻ (7)

[PdCl₄]²⁻+ H₂ → Pd⁰ +2H⁺ + 4Cl⁻ (8)

2[RhCl₆]³⁻ + 3H₂ → 2Rh⁰ + 6H⁺ + 12Cl⁻ (9)

As can be seen from the reactions above, when an aqueous solution of NaCl mixed with a deep eutectic solvent, in the presence of HCl, is used as electrolyte, first PGMs are dissolved in the form of chlorometalates, and then, reduced (reactions 6, 7, 8, 9) by the electrochemically generated H₂ (reaction 5) and deposited in the cathode.

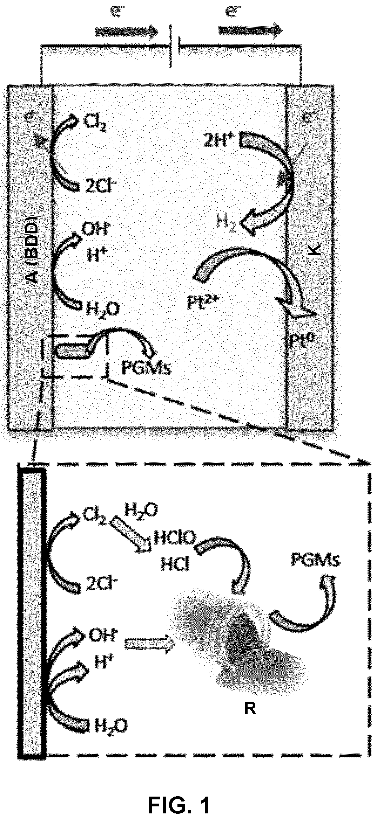

A scheme of the complete process can be seen in Fig. 1.

As mentioned above, the process of the invention also comprises the step of recovering the PGMs electrodeposited on the cathode. Electrochemical switching polarity of electrodes can be applied to recover the PGMs as precipitates. The recovered metals can be obtained and sold as concentrates.

In an embodiment, optionally in combination with one or more features of the various embodiments described above or below, the recovering step b) can be performed by switching the polarization of the reaction in order to detach PGMs from the cathode, wherein the detached PGMs form a precipitate; and filtering the PGM precipitate. More particularly, the recovering of the electrodeposited PGMs can be carried out by:
i) submerging the cathode with the electrodeposited PGMs in a NaCl aqueous solution from 0.25 M to 1 M, such as a 0.5 M NaCl aqueous solution, and
ii) applying a fixed potential of from 0.5 V to 1 V, such as of 1 V.

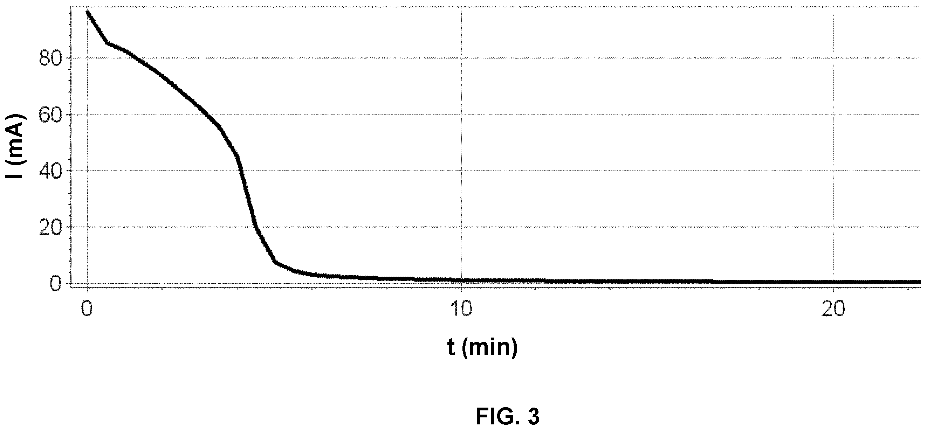

The process can be performed at room temperature during the required time until substantially all the deposited PGMs has been detached from the cathode. The detached PGMs form a precipitate that can be recovered by filtering. Figure 3 shows the chronoamperometry test applying 1 V, after 5 minutes, the current decrease until almost 0, which is a signal of PGMs detachment.

After carrying out the coupled electroleaching and electrodeposition process and recovering the leached PGMs from the electrolyte, the DESs can be recovered and recycled for the next leaching batch.

Throughout the description and claims the word "comprise" and variations of the word, are not intended to exclude other technical features, additives, components, or steps. Furthermore, the word "comprise" encompasses the case of "consisting of".

The following examples and drawings are provided by way of illustration, and they are not intended to be limiting of the present invention. Furthermore, the present invention covers all possible combinations of particular and preferred embodiments described herein.

### Examples

### Preparation of the electrolyte

The electrolyte used was made by mixing 80% of deep Eutectic Solvent (DES) and 20% of aqueous solution of NaCl (0.5 M). The DES was made by heating and stirring a 1:3 molar ratio mixture of choline chloride (ChCl, 98% Sigma-Aldrich) and formic acid (FA, 98% Sigma-Aldrich) together at 80 °C until a homogeneous liquid formed. The other DES was made exactly the same as ChCl/formic acid (1:3) but replacing formic acid by oxalic acid and using a 1:1 molar ratio mixture of ChCl and oxalic acid (OA, 98% Sigma-Aldrich).

### Electrochemical reactor

The electrochemical reactor consisted of custom-made borosilicate bottle (liquid volume 100 ml), hosted an anode working electrode, a counter electrode, and a reference electrode. The anode consisted of a boron-doped diamond (BDD) (DIACHEM^{®} electrode, CONDIAS) or a boron-doped reduced graphene oxide-based graphite (BRGO) prepared as explained below. The other two electrodes were a Leak-Free 3.4 M KCI saturated Ag/AgCl reference electrode (Innovative Instruments Ltd) and a graphite rod (acting as cathode).

The BRGO electrode was manufactured with the following protocol. Commercial graphene oxide (GO) dispersion (4 mg/mL) supplied by Graphenea (average particle < 10 µm; carbon: 49-56%; oxygen: 41-50%; nitrogen: 0-1%) and boric acid was purchased from Sigma Aldrich. 6 g of boric acid dissolved in 4 g/L GO solution was loaded into a Teflon lined stainless steel autoclave and warned up at 180 °C for 16 h. The synthetized material was cleaned three times with deionized water and frozen for 24 h at -80 °C. Then it was freeze-dried at -10 °C, 63 Pa for 12 h. B-doped reduced graphene oxide (BRGO) electrodes were prepared by blending the as-synthesised graphene material with polyvinyl alcohol and ethanol. The blend was agitated by ultrasonication for merely 8 h to ensure homogeneity. This BRGO slurry was deposited onto a graphite plate, which acted as current collector, and dried in an oven at 60 °C to remove the organic solvents and to obtain a plane electrode. Electrodes of 3.5 x 2 = 7 cm² with both sides exposed to the liquid, therefore a total surface area of 14 cm² for the electroleaching reactor. Before their testing in the electroleaching experiments, the electrodes were conditioned by immersion in 0.1 mol L⁻¹ NaCl solution for not less than 24 h to moisten the pores of the electrodes. Finally, they were assembled in the electroleaching reactor.

### General method for the electrochemical recovery of PGMs from solid residues.

The electrochemical reactor was operated in batch mode at 80 °C under constant stirring (300 rpm) for 1, 3, or 6 hours. Chronoamperometry (fixed current 900 mA or 64 mA/cm²) or chronopotentiometry (fixed working potential from 2.5 V to 3 V) were carried out using a Biologic multichannel potentiostat (VSP-3e, France). The PGMs containing starting materials were a milled spent autocatalyst comprising the metallic elements shown in Table 1 and milled spent membrane solid residue enriched with Pd (Table 2).

**Table 1**

| **Element** | **Unit** | **Sample** |
|---|---|---|
| **Rh** | **mg/kg** | **349** |
| **Pd** | **mg/kg** | **1681** |
| **Pt** | **mg/kg** | **975** |
| **Ce** | mg/kg | 44095 |
| **La** | mg/kg | 4542 |
| **Mg** | mg/kg | 52643 |
| **Al** | mg/kg | 186377 |
| **Si** | mg/kg | 166797 |
| **K** | mg/kg | 1936 |
| **Ca** | mg/kg | 5788 |
| **Ti** | mg/kg | 4479 |
| **Fe** | mg/kg | 6908 |
| **Cu** | mg/kg | 178 |
| **Pb** | mg/kg | 616 |

**Table 2**

| **Element** | **Unit** | **Sample** |
|---|---|---|
| **Pd** | **mg/kg** | **89142** |
| Ag | mg/kg | 4965 |
| Al | mg/kg | 1713 |
| Fe | mg/kg | 72 |
| Ni | mg/kg | 3 |
| Zr | mg/kg | 41 |

The PGMs containing residue was contacted with the electrolyte at 80 °C under magnetic stirring. The specific wt/wt ratio (solid/liquid) was 1:9. As an additive, HCl (2 M) was added in a ratio of solid residue/HCl = 1:1). The chemical composition of the starting material, leachates and precipitates were analysed by inductively coupled plasma mass spectrometry (ICP-MS).

The contents i) and ii) above can be determined by using inductive coupled plasma mass spectroscopy (ICP-MS), which is a technique well-known in the art. The skilled person will know how to carry out the above measurements. For example, these measurements can be carried out by using an ICP-MS spectrometer such as e.g., the equipment Agilent 7900 ICP/MS in the following conditions:

| | | |
|---|---|---|
| Instrument | Agilent 7900 | |
| Nebulizer | Quartz concentric | |

| Spray chamber | quartz Scott double pass | |
|---|---|---|
| Plasma RF generator | Power | 1600W |
| | Frequency | 26 MHz |
| Ar flow rate | Plasma | 15 mL/min |
| | Auxiliary gas | 0.9 mL/min |
| | Nebulizer | 0.77 mL/min |
| Interface | Sampler cone | Platinum 1.2 mm |
| | Skimmer cone | Platinum |
| Data acquisition | Collision/helio cell mode | |
| | Sweeps/reading | 100 |
| | Replicate time | 200 ms |
| | Number of replicates | 4 |
| Analytical masses | ¹⁰⁵Pd, ¹⁹⁵Pt,¹⁰³Rh, ¹³⁹La, ²⁷Al, ⁵⁶Fe, ¹⁴⁰Ce, ¹⁴⁶Nd, ²⁰⁸Pb, ¹⁰⁷Ag | |
| Internal standard masses | ⁴⁵Sc, ¹³³Cs, ¹⁹³Ir, | |

### Calibration parameters:

- curve fit: linear, Correlation coefficient limit: 0.9998%.
- Origin: Blank offset

The standard concentration used for the calibration curve were: 0, 1, 5, 20, 100, 500, 2000 and 10000 µg/L of each element. These standards were made from individual certified standard with a concentration of 1000 mg/L.

For the digestion of the solid residue, microwave assisted acid digestion using Milestone Ethos Up was carried out. In a first step, a representative sample of approximately 0.1 g was digested in 2 mL of concentrated nitric acid (65%), 6 ml hydrochloric acid (37%) and 2 mL hydrofluoric acid (48%) using microwave heating. Both sample and acid mixture were placed in inert PTFE sealed microwave vessels. The temperature profile was set to reach 230 ± 10 °C in 20 min. and to remain at 230 ± 10 °C for 15 min. After that, a second step adding 25 ml of 4 % boric acid was carried out to complex the HF excess. The temperature profile was set to reach 180 ± 10 °C in 20 min. and to remain at 180 ± 10 °C for 15 min. After cooling, the vessel content was diluted to 50 ml, and analyzed by ICP-MS. The metals deposited in graphite electrode was dissolved in aqua regia.

### Comparative examples (Control, i.e. conventional leaching, without applying potential)

The results of the recovery after carrying out a conventional leaching, that is without applying any potential or current were used as comparative examples (controls). They were carried out the same experimental conditions than the examples but at an open circuit condition without applying potential or current.

### Experimental results

In all the examples, the leaching recoveries of the different elements have been calculated by two approaches:
i) based on the metals remaining in the residual solid (the difference between the initial amount of each metal and the final amount in the residual solid is considered to be the amount that has been leached); and/or
ii) based on the sum of what has been detected in the leachate and the amount deposited on the cathode.

The recovery of the controls is calculated as in approach ii), that is from the sum of the amount in the leachate and on the cathode.

In Example 1, both results are shown as an example. However, in general, both values are similar, except for Fe. Thus, only the value corresponding to the second approach (amount detected in the leachate + deposited on the cathode) will be presented for the following experiments.

### EXAMPLE 1. Electroleaching at 2.5 V for 3 h vs. the conventional leaching

An electroleaching process was performed in the reactor under the conditions pointed out below and using BDD used as anode, leading to a recovery of Pd and Pt of around an 80% and around 40% of Rh. No external oxidant was added.

Conditions:
- 80% DES solution of choline chloride/formic acid 1:3 + 20% aqueous solution of NaCl (0.5 M) using HCl (2 M) as additive (ratio solid residue /HCl = 1:1);
- electrode fixed potential: 2.5 V for 3 h at 80 °C; and

The results are shown in Table 3.

**Table 3**

| | Pd | Pt | Rh | Al | Fe | La | Ce | Nd | Pb |
|---|---|---|---|---|---|---|---|---|---|
| Control (conventional leaching, without applying potential) (%) | 70 | 4 | 11 | 4 | 44 | 34 | 27 | 16 | 85 |
| Electrochemical recovery calculated from solid residue (%) | 82 | 76 | 38 | 18 | 27 | 35 | 24 | 20 | 78 |
| Electrochemical recovery calculated from leachate + graphite (%) | 75 | 88 | 44 | 4 | 59 | 31 | 17 | 15 | 88 |
| Leached metals remaining in liquid (%) | 10 | 47 | 39 | 100 | 100 | 100 | 100 | 99 | 9 |
| Leached metals deposited onto graphite (%) | 90 | 53 | 61 | 0 | 0 | 0 | 0 | 1 | 91 |

It can be seen that, in comparison with the conventional leaching performed at the same conditions but without applying any current, the leachability of Pt was improved up to around 84%, the leachability of Rh up to around 33% and the one of Pd in around a 5%.

Apart from improving the leachability, part of the PGMs were selectively and simultaneously electrodeposited on the cathode in the same reactor: Particularly, around 90% of the Pd, around 53% of Pt, and around 61% of Rh were electrodeposited onto the cathode (graphite). Although Pb was also got deposited, the main impurities were left in solution (Al, Fe).

### EXAMPLE 2. Influence of reaction time in the electroleaching experiments at 2.5 V

An electroleaching process was carried out as in Example 1 but by extending the reaction time is extended to 6 h. The results are shown in Table 4.

**Table 4**

| | Pd | Pt | Rh | Al | Fe | La | Ce | Nd | Pb |
|---|---|---|---|---|---|---|---|---|---|
| Control (conventional leaching, without applying potential) (%) | 78 | 4 | 13 | 6 | 51 | 40 | 33 | 18 | 88 |
| Electrochemical recovery calculated from leachate + graphite (%) | 76 | 84 | 45 | 5 | 70 | 39 | 29 | 18 | 81 |
| Leached metals remaining in liquid (%) | 15 | 74 | 44 | 98 | 99 | 92 | 90 | 90 | 13 |
| Leached metals "deposited" to graphite (%) | 85 | 26 | 56 | 2 | 1 | 8 | 10 | 10 | 87 |

As can be seen, the recoveries did not increase significantly compared to the process performed for 3 h. Thus, a longer reaction time did not improve the yield of extraction and PGMs recovery. Nevertheless, the electrodeposition of Pd vs. the rest of PGMs, particularly vs. Pt, was more selective (~85% Pd; ~26% Pt and ~56% Rh deposited onto the cathode vs- 90% Pd, 53% Pt, and 61% of Example 1).

### COMPARATIVE EXAMPLE 1. Influence of additive in the electroleaching process

An electroleaching process was carried out as in Example 1 but without adding HCl (2M) as additive. The results are shown in Table 5.

**Table 5**

| | | | | Al | Fe | La | Ce | Nd | Pb |
|---|---|---|---|---|---|---|---|---|---|
| Control (conventional leaching, without applying potential) (%) | 39 | 1 | 4 | 2 | 40 | 12 | 4 | 7 | 58 |
| Electrochemical recovery calculated from leachate + graphite (%) | 1 | 8 | 1 | 2 | 47 | 18 | 11 | 8 | 4 |
| Leached metals remaining in liquid (%) | 53 | 94 | 77 | 99 | 100 | 68 | 72 | 66 | 60 |
| Leached metals "deposited" to graphite (%) | 47 | 6 | 23 | 1 | 0 | 32 | 28 | 34 | 40 |

It can be seen that when HCl is not added to the reaction system, the recoveries of almost all the elements decreased drastically, compared to the reaction performed in the presence of HCl. These results demonstrate that the presence of the mentioned additive is necessary to achieve the desirable leaching behavior.

### EXAMPLE 3. Influence of ions in the aqueous solutions in the electroleaching process

An electroleaching process was carried out as in Example 1 but with an aqueous solution without NaCl. The results are shown in Table 6.

**Table 6**

| | Pd | Pt | Rh | Al | Fe | La | Ce | Pb |
|---|---|---|---|---|---|---|---|---|
| Electrochemical recovery calculated from leachate + graphite (%) | 62 | 53 | 26 | 4 | 24 | 25 | 16 | 41 |
| Leached metals remaining in liquid (%) | 19 | 70 | 50 | 94 | 99 | 89 | 89 | 13 |
| Leached metals "deposited" to graphite (%) | 81 | 30 | 50 | 6 | 1 | 11 | 11 | 87 |

It was observed that when the concentrations of ions used in the aqueous solution was decreased, the recoveries of PGMs decreased slightly, compared to the reaction performed with an aqueous solution with NaCl 0.5 M (see results of Example 1, Table 2). Thus, an improved effect was observed with the presence of NaCl in the aqueous solution used for the electrolyte.

### EXAMPLE 4. Comparison using galvanostatic electroleaching experiments

A galvanostatic process (fixed current) was carried out to compare vs potentiostatic control, adjusting the applied current density to 64 mA/cm² and maintaining equal the rest of the leaching conditions as in Example 1, that is:
- 80% DES solution of choline chloride/formic acid 1:3 + 20% aqueous solution of NaCl (0.5M) using HCl (2M) as additive (ratio solid residue /HCl = 1:1);
- Current density = 64 mA/cm² during 3 h at 80 °C; and
- BDD anode.

The results are shown in Table 7.

**Table 7**

| | Pd | Pt | Rh | Al | Fe | La | Ce | Nd | Pb |
|---|---|---|---|---|---|---|---|---|---|
| Electrochemical recovery calculated from leachate + graphite (%) | 75 | 82 | 42 | 4 | 47 | 33 | 22 | 15 | 81 |
| Leached metals remaining in liquid (%) | 13 | 63 | 45 | 99 | 100 | 100 | 100 | 99 | 17 |
| Leached metals "deposited" to graphite (%) | 87 | 37 | 55 | 1 | 0 | 0 | 0 | 1 | 83 |

It was observed that similar recoveries vs potentiostatic control (Table 3), and it was confirmed that Pd mainly deposits in graphite, while Pt and Rh are half distributed between graphite and liquid (table 6). Main impurities remain in the electrolyte, which results positive to the purification of the recovered PGMs.

### EXAMPLE 5. Influence of leaching time in the galvanostatic electroleaching process

The effect of reducing the reaction time was also studied in the galvanostatic process. Thus, an electroleaching process was carried out as in Example 4, except that the leaching time was reduced to 1 h. The results are shown in Table 8.

**Table 8**

| | Pd | Pt | Rh | Al | Fe | La | Ce | Nd | Pb |
|---|---|---|---|---|---|---|---|---|---|
| Electrochemical recovery calculated from leachate + graphite (%) | 71 | 65 | 31 | 4 | 33 | 29 | 15 | 13 | 80 |
| Leached metals remaining in liquid (%) | 40 | 63 | 61 | 100 | 100 | 100 | 100 | 100 | 41 |
| Leached metals "deposited" to graphite (%) | 60 | 37 | 39 | 0 | 0 | 0 | 0 | 0 | 59 |

It was observed that when the leaching time was reduced to 1 h, the recovery efficiency of Pt decreased slightly (from ~82% to ~65%), and the electrodeposition of Pd was significantly reduced (from ~87% to ~60%). Thus, among the conditions studied so far, 3 h of reaction was considered as the optimum leaching time.

### EXAMPLE 6. Influence of replacement of BDD anode by Boron-doped reduced graphene oxide-based graphite (BRGO) anodes.

An electroleaching process was carried out as in Example 4, except that a boron-doped reduced graphene oxide-based graphite (BRGO) anode was used instead of the BDD anode. The results are shown in Table 9.

**Table 9**

| | Pd | Pt | Rh | Al | Fe | La | Ce | Nd | Pb |
|---|---|---|---|---|---|---|---|---|---|
| Electrochemical recovery calculated from leachate + graphite (%) | 82 | 49 | 26 | 0 | 23 | 33 | 28 | 19 | 70 |
| Leached metals remaining in liquid (%) | 16 | 73 | 45 | 96 | 99 | 87 | 85 | 85 | 32 |
| Leached metals "deposited" to graphite (%) | 84 | 27 | 55 | 4 | 1 | 13 | 15 | 15 | 68 |
| Control (conventional leaching, without current) (%) | 70 | 4 | 11 | 4 | 44 | 34 | 27 | 16 | 85 |

It was observed that, compared to the BDD (Table 6), BRGO's electrode was able to achieve similar recovery for Pd (82% BRGO vs. 75% BDD for Pd, but those for Pt and Rh were not as high as the ones using BDD (49% BRGO vs. 82% BDD for Pt; 26% BRGO vs. 42% BDD for Rh). However, the results obtained indicate that BRGO was also able to improve the leachability of the PGMs compared to the conventional leaching (process without applying any voltage or current), especially the one of Pt (improvement of 45%) and Rh (improvement of 15%), and 12% for Pd.

### EXAMPLE 7. Influence of changing potentiostatic control using boron-doped reduced graphene oxide-based graphite (BRGO) anodes

An electroleaching process was carried out as in Example 6, but by using an applied electrode potential of 3 V instead of fixed current density to 64 mA/cm². The results are shown in Table 10.

**Table 10**

| | Pd | Pt | Rh | Al | Fe | La | Ce | Pb |
|---|---|---|---|---|---|---|---|---|
| Electrochemical recovery calculated from leachate + graphite (%) | 72 | 55 | 29 | 4 | 25 | 28 | 16 | 47 |
| Leached metals remaining in liquid (%) | 21 | 77 | 52 | 90 | 94 | 44 | 45 | 14 |
| Leached metals "deposited" to graphite (%) | 79 | 23 | 48 | 10 | 6 | 56 | 55 | 86 |

As can be seen from the results above, a similar recovery was observed.

### EXAMPLE 8. Replacement of formic acid by oxalic acid in the DES

An electroleaching process was carried out as in Example 1, but by using oxalic acid (ChCl/oxalic acid, 1:1) instead of formic acid (ChCl/formic acid 1:3) as the hydrogen bond donor which form the DES. The results are shown in Table 11.

**Table 11**

| | Pd | Pt | Rh | Al | Fe | La | Ce | Pb |
|---|---|---|---|---|---|---|---|---|
| Control - without current (%) | 95 | 12 | 17 | 7 | 40 | 3 | 1 | 59 |
| Electrochemical recovery calculated from leachate + graphite (%) | 77 | 57 | 35 | 6 | 41 | 2 | 1 | 50 |
| Leached metals remaining in liquid (%) | 20 | 26 | 26 | 6 | 41 | 1 | 1 | 10 |
| Leached metals "deposited" to graphite (%) | 58 | 31 | 9 | 0 | 0 | 0 | 0 | 40 |

It was observed that the effect of replacement of the formic acid by oxalic acid as the hydrogen bond donor which form the deep eutectic solvent does not significantly affect the leachability and recovery of PGMs. Results also showed a better leachability of Pt up to 45%, Rh up to 18% versus conventional leachate experiment (control).

### EXAMPLE 9. Recovering of the PGMs electrodeposited on the cathode

Once performed the leaching, the PGMs electrodeposited on the cathode were recovered by switching the polarization of the reaction. The cathode (graphite with the deposited PMGs) was submerged in aqueous solution of NaCl (0.5 M), and a fixed potential of 1 V was applied for 25 minutes at room temperature. The PGMs detached from the cathode forming a precipitate, which was able to be recovered by filtering. Filtration was carried, first, with a 5 µm pore filter and, then, with a 0.45 µm pore filter. The flowsheet of the process is shown in Fig. 2. The chronoamperometry test applying 1V was run for 30 min, although it can be seen that in only 5 min all the PGMs were release from the electrode surface (see Fig. 3). The recovered solid was mainly composed by Pd (≈70%), following by a ≈8% of Pt and ≈4% of Rh (≈82% of PGMs in the solid). The only impurity in the solid was Pb, although its presence (≈18%) was considerably lower compared to the PGMs. The recovery results for the polarization process and composition of the final solid recovered is shown in Table 12.

**Table 12**

| | Units | Pd | Pt | Rh | Al | Fe | La | Ce | Nd | Pb |
|---|---|---|---|---|---|---|---|---|---|---|
| 1st filter (5 µm) | µg | 4592 | 540 | 246 | 19 | 14 | 3 | 10 | 1 | 1144 |
| | %* | 70 | 8 | 4 | 0 | 0 | 0 | 0 | 0 | 17 |
| 2nd filter (0.45 µm) | µg | 1480 | 143 | 85 | 14 | 25 | 1 | 4 | 1 | 391 |
| | %* | 69 | 7 | 4 | 1 | 1 | 0 | 0 | 0 | 18 |
| Final electrolyte (after 2nd filtration) | µg | 673 | 502 | 49 | 344 | 129 | 0 | 0 | 0 | 168 |
| | ppm | 13 | 10 | 1 | 7 | 2 | 0 | 0 | 0 | 3 |

| | | | | | | | | | | |
|---|---|---|---|---|---|---|---|---|---|---|
| * Approximate composition of the recovered solid. | | | | | | | | | | |

### EXAMPLE 10. Recovering of the PGMs electrodeposited on the cathode using a different starting material such as spent membranes with Pd content.

An electroleaching process was carried out as in Example 4 but with spent membranes as solid residue.

In Table 13 the results of the application of the electrochemical process for recovering platinum group metals (PGMs) from a different solid residue, which is highly concentrated with Pd, are shown.

**Table 13**

| | Pd | Ag | Al | Fe | Ni | Zr |
|---|---|---|---|---|---|---|
| Total content initial residue (mg/kg) | 89142 | 4965 | 1713 | 72 | 3 | 41 |
| Leached metals in liquid without electricity (mg/kg) | 25 | 2 | 0 | 14 | 0 | 0 |
| Leached metals in liquid with electricity (mg/kg) | 517 | 21 | 0 | 0 | 0 | 0 |
| Electrochemical recovered metals "deposited" or "precipitated" on cathode (mg/kg) | 13811 | 888 | 14 | 42 | 3 | 2 |

It is observed that Pd is significantly recovered as a solid product from spent membranes, when we apply electricity as a fixed current density of 64 mA/cm² vs without applying electricity. The process runs without adding any external additive such as H₂O₂. The main advantage vs. conventional leaching process is that Pd is first released from the spent membrane and recovered as a solid material on the electrode surface or as a precipitate.

### Citation List

- WO2008155464
- Smith E.L. et al, "Deep Eutectic Solvents (DESs) and Their Applications", Chem. Rev. 2014, 114, 11060-11082.

## Claims

1. An electrochemical process for recovering platinum group metals (PGMs) from a PGM-containing solid residue, the process comprising the steps of:
a) subjecting the solid residue to electroleaching in order to leach the PGMs from the solid residue and, concomitantly, electrodepositing the leached PGMs onto the cathode; wherein electroleaching and electrodepositing are carried out in an electrolyte comprising a deep eutectic solvent (DES) and an aqueous solution comprising chloride ions and having a pH<7; and
b) recovering the electrodeposited PGMs;
wherein the DES consists of a mixture of:
(i) a hydrogen bond acceptor (HBA) compound (A) which is choline chloride; and
(ii) a hydrogen bond donor (HBD) compound (B) selected from the group consisting of (C₁-C₁₂)alcohol, (C₁-C₁₂)aldehyde, (C₁-C₁₈)carboxylic acid, (C₁-C₆)urea, (C₁-C₁₂)amide, (C₁-C₁₂)nitrogenated compound, (C₁-C₁₂)aminoacid, and (C₁-C₁₂)sugar;
in a molar ratio of (A) to (B) from 1:10 to 10:1.

2. The electrochemical process of claim 1, wherein the DES is selected from the group consisting of choline chloride:oxalic acid; choline chloride:formic acid, choline chloride:lactic acid, choline chloride:lactic acid and citric acid, choline chloride:lactic acid and malonic acid.

3. The electrochemical process of claim 2, wherein the DES is a mixture of choline chloride and a carboxylic acid selected from oxalic acid and formic acid.

4. The electrochemical process of claim 1 to 3, wherein the aqueous solution comprising chloride ions and having a pH<7 is a mixture of water comprising NaCl in a concentration from 0 M to 2.5 M and HCl as additive.

5. The electrochemical process of claim 4, wherein the DES is in an amount from 75 wt.% to 90 wt% with respect to the total amount of DES and water optionally containing NaCl.

6. The electrochemical process of claims 4 or 5, wherein water comprises NaCl in a concentration from 0.3 M to 0.6 M.

7. The electrochemical process of claims 1 to 6, wherein weight ratio solid residue to electrolyte is from 1:5 to 1:15.

8. The electrochemical process of claims 4 to 7, wherein HCl is added in a ratio solid residue:HCl of 1:1.

9. The electrochemical process of claims 1 to 8, wherein step a) is carried out in a reactor comprising a working electrode, a counter electrode; and a reference electrode, wherein the working electrode is selected from a boron-doped diamond (BDD) and a boron-doped reduced graphene oxide-based graphite (BRGO).

10. The electrochemical process of claims 1 to 9, wherein step a) is performed by applying a potential from 2.5 V to 3 V or, alternatively, by applying a current density from 45 mA/cm² to 64 mA/cm².

11. The electrochemical process of claims 1 to 10, wherein step a) is carried at a temperature from 20 °C to 100 °C.

12. The electrochemical process of claims 1 to 11, wherein step a) is carried out for a period of time from 1 hour to 6 hours.

13. The electrochemical process of claims 1 to 12, wherein the recovering of the electrodeposited PGMs is carried out by:
i) submerging the cathode with the electrodeposited PGMs in a NaCl aqueous solution from 0.25 M to 1 M, and
ii) applying a fixed potential of from 0.5 V to 1 V.

14. The electrochemical process of claims 1 to 13, wherein the PGM-containing solid residue is selected from the group consisting of a spent autocatalyst, a tailings, an electronic waste, a spent membranes residue, a catalytic converters, a spent petroleum refining catalyst, a spent Proton Exchange Membrane fuel cells (PEMFC), and a spent catalysts used in the chemical industry.

15. The electrochemical process of claim 14, wherein the PGM-containing solid residue is a spent autocatalyst.

## Patentansprüche

1. Ein elektrochemisches Verfahren zum Gewinnen von Platingruppenmetallen (PGM) aus einem PGM-haltigen festen Rückstand, wobei das Verfahren die folgenden Schritte umfasst:
a) elektrolytisches Auslaugen des festen Rückstands, um die PGM aus dem festen Rückstand auszulaugen, und gleichzeitiges galvanisches Abscheiden der ausgelaugten PGM auf der Kathode; wobei das elektrolytische Auslaugen und das galvanische Abscheiden in einem Elektrolyten durchgeführt werden, der ein stark eutektisches Lösungsmittel (DES, *deep eutectic solvents*) und eine wässrige Lösung umfasst, die Chloridionen umfasst und einen pH-Wert<7 hat; und
b) Rückgewinnen der galvanisch abgeschiedenen PGM;
wobei das DES aus einer Mischung besteht, aus:
(i) einer Verbindung (A), die ein Wasserstoffbrückenakzeptor ist, welche Cholinchlorid ist; und
(ii) einer Verbindung (B), die ein Wasserstoffbrückendonor (HBD) ist, die ausgewählt ist aus der Gruppe bestehend aus (C₁-C₁₂)-Alkohol, (C₁ -C₁₂)-Aldehyd, (-C₁-C₁₈)-Carbonsäure, (C₁-C₆)-Harnstoff, (C₁-C₁₂)-Amid, (C₁-C₁₂)-stickstoffhaltiger Verbindung, (C₁-C₁₂)-Aminosäure und (C₁-C₁₂)-Zucker;
in einem Molverhältnis von (A) zu (B) von 1:10 bis 10: 1.

2. Das elektrochemische Verfahren von Anspruch 1, wobei das DES ausgewählt ist aus der Gruppe bestehend aus Cholinchlorid:Oxalsäure; Cholinchlorid: Ameisensäure, Cholinchlorid:Milchsäure, Cholinchlorid:Milchsäure und Zitronensäure, Cholinchlorid:Milchsäure und Malonsäure.

3. Das elektrochemische Verfahren von Anspruch 2, wobei das DES eine Mischung aus Cholinchlorid und einer Carbonsäure ist, die aus Oxalsäure und Ameisensäure ausgewählt ist.

4. Das elektrochemische Verfahren von Anspruch 1 bis 3, wobei die wässrige Lösung, die Chloridionen umfasst und einen pH-Wert<7 hat, eine Mischung aus Wasser, enthaltend NaCl in einer Konzentration von 0 M bis 2,5 M und HCl als Zusatzstoff ist.

5. Das elektrochemische Verfahren von Anspruch 4, wobei das DES in einer Menge von 75 Gew.- % bis 90 Gew.-% in Bezug auf die Gesamtmenge von DES und Wasser, wahlweise enthaltend NaCl, vorliegt.

6. Das elektrochemische Verfahren von den Ansprüchen 4 oder 5, wobei das Wasser NaCl in einer Konzentration von 0,3 M bis 0,6 M enthält.

7. Das elektrochemische Verfahren von den Ansprüchen 1 bis 6, wobei das Gewichtsverhältnis von festem Rückstand zu Elektrolyt von 1:5 bis 1:15 reicht.

8. Das elektrochemische Verfahren von den Ansprüchen 4 bis 7, wobei HCl in einem Verhältnis von festem Rückstand:HCl von 1:1 zugegeben wird.

9. Das elektrochemische Verfahren von den Ansprüchen 1 bis 8, wobei der Schritt a) in einem Reaktor durchgeführt wird, der eine Arbeitselektrode, eine Gegenelektrode und eine Referenzelektrode umfasst, wobei die Arbeitselektrode aus einem bordotierten Diamanten (BDD) und einem auf bordotiertem reduziertem Graphenoxid (BRGO) basierten Graphit ausgewählt ist.

10. Das elektrochemische Verfahren von den Ansprüchen 1 bis 9, wobei der Schritt a) durch Anlegen eines Potentials von 2,5 V bis 3 V oder, alternativ, durch Anlegen einer Stromdichte von 45 mA/cm² bis 64 mA/cm² durchgeführt wird.

11. Das elektrochemische Verfahren von den Ansprüchen 1 bis 10, wobei der Schritt a) bei einer Temperatur von 20 °C bis 100 °C durchgeführt wird.

12. Das elektrochemische Verfahren von den Ansprüchen 1 bis 11, wobei der Schritt a) für einen Zeitraum von 1 Stunde bis 6 Stunden durchgeführt wird.

13. Das elektrochemische Verfahren von den Ansprüchen 1 bis 12, wobei die Rückgewinnung der galvanisch abgeschiedenen PGM durchgeführt wird durch:
i) Eintauchen der Kathode mit den galvanisch abgeschiedenen PGM in eine wässrige NaCl-Lösung von 0,25 M bis 1 M und
ii) Anlegen eines festen Potentials von 0,5 V bis 1 V.

14. Das elektrochemische Verfahren von den Ansprüchen 1 bis 13, wobei der PGM-haltige feste Rückstand ausgewählt ist aus der Gruppe bestehend aus einem verbrauchten Autokatalysator, *Tailings* (Aufbereitungsrückständen), einem elektronischem Abfall, einem verbrauchten Membranrückstand, einem Fahrzeugkatalysatoren, einem verbrauchten Erdölraffinierungskatalysator, einer verbrauchten Protonenaustauschmembran-Brennstoffzellen (PEMFC, *Proton Exchange Membrane Fuel Cells*) und einem verbrauchten in der chemischen Industrie verwendeten Katalysator.

15. Das elektrochemische Verfahren von Anspruch 14, wobei der PGM-haltige feste Rückstand ein verbrauchter Autokatalysator ist.

## Revendications

1. Un procédé électrochimique pour récupérer des métaux du groupe du platine, dits MGP ou PGM (pour *platinum group metals*)*,* à partir d'un résidu solide contenant des PGM, le procédé comprenant les étapes consistant à :
a) soumettre le résidu solide à une électro-lixiviation afin de lixivier les PGM du résidu solide et, simultanément, électrodéposer les PGM lixiviés sur la cathode ; dans lequel l'électro-lixiviation et l'électrodéposition sont effectuées dans un électrolyte comprenant un solvant eutectique profond (DES, *deep eutectic solvent*) et une solution aqueuse comprenant des ions chlorure et ayant un pH<7 ; et
b) récupérer les PGM électrodéposés ;
dans lequel le DES consiste en un mélange de :
(i) un composé (A) accepteur de liaison hydrogène (HBA) qui est le chlorure de choline ; et
(ii) un composé (B) donneur de liaison hydrogène (HBD) choisi dans le groupe constitué par alcool en (C₁-C₁₂), aldéhyde en (C₁-C₁₂), acide carboxylique en (C₁-C₁₈), urée en (C₁-C₆), amide en (C₁-C₁₂), composé azoté en (C₁-C₁₂), acide aminé en (C₁-C₁₂) et sucre en (C₁-C₁₂) ;
dans un rapport molaire de (A) à (B) de 1:10 à 10:1.

2. Le procédé électrochimique de la revendication 1, dans lequel le DES est choisi dans le groupe constitué par chlorure de choline : acide oxalique ; chlorure de choline : acide formique, chlorure de choline : acide lactique, chlorure de choline : acide lactique et acide citrique, chlorure de choline : acide lactique et acide malonique.

3. Le procédé électrochimique de la revendication 2, dans lequel le DES est un mélange de chlorure de choline et d'un acide carboxylique choisi parmi l'acide oxalique et l'acide formique.

4. Le procédé électrochimique des revendications 1 à 3, dans lequel la solution aqueuse comprenant des ions chlorure et ayant un pH<7 est un mélange d'eau comprenant du NaCl dans une concentration allant de 0 M à 2,5 M et du HCl comme additif.

5. Le procédé électrochimique de la revendication 4, dans lequel le DES est en une quantité allant de 75 % en poids à 90 % en poids par rapport à la quantité totale de DES et d'eau contenant facultativement du NaCl.

6. Le procédé électrochimique des revendications 4 ou 5, dans lequel l'eau comprend du NaCl à une concentration allant de 0,3 M à 0,6 M.

7. Le procédé électrochimique des revendications 1 à 6, dans lequel le rapport pondéral du résidu solide à l'électrolyte est de 1:5 à 1:15.

8. Le procédé électrochimique des revendications 4 à 7, dans lequel le HCl est ajouté dans un rapport résidu solide:HCl de 1:1.

9. Le procédé électrochimique des revendications 1 à 8, dans lequel l'étape a) est effectuée dans un réacteur comprenant une électrode de travail, une contre-électrode ; et une électrode de référence, dans lequel l'électrode de travail est choisie parmi un diamant dopé au bore (BDD) et un graphite à base d'oxyde de graphène réduit dopé au bore (BRGO, *boron-doped reduced graphene oxide*)*.*

10. Le procédé électrochimique des revendications 1 à 9, dans lequel l'étape a) est effectuée en appliquant un potentiel de 2,5 V à 3 V ou, en variante, en appliquant une densité de courant de 45 mA/cm² à 64 mA/cm².

11. Le procédé électrochimique des revendications 1 à 10, dans lequel l'étape a) est effectuée à une température allant de 20 °C à 100 °C.

12. Le procédé électrochimique des revendications 1 à 11, dans lequel l'étape a) est effectuée pendant une période de temps de 1 heure à 6 heures.

13. Le procédé électrochimique des revendications 1 à 12, dans lequel la récupération des PGM électrodéposés est effectuée en :
i) submergeant la cathode avec les PGM électrodéposés dans une solution aqueuse de NaCl de 0,25 M à 1 M, et
ii) appliquant un potentiel fixe de 0,5 V à 1 V.

14. Le procédé électrochimique des revendications 1 à 13, dans lequel le résidu solide contenant des PGM est choisi dans le groupe constitué par un autocatalyseur usé, des *tailings* (résidus miniers), des déchets électroniques, un résidu de membranes usé, un convertisseurs catalytiques, un catalyseur de raffinage de pétrole usé, une piles à combustible à membrane échangeuse de protons usées (PEMFC, *Proton Exchange Membrane Fuel Cell*) et un catalyseurs usés utilisés dans l'industrie chimique.

15. Le procédé électrochimique de la revendication 14, dans lequel le résidu solide contenant des PGM est un autocatalyseur usé.
